# EUROPEAN PATENT SPECIFICATION

(11) **EP 3 049 876 B1**
(45) Date of publication and mention of the grant of the patent: **12.09.2018**
(21) Application number: 13894869.0
(22) Date of filing: 25.09.2013
(51) Int. Cl.: G05B 19/042, G05B 15/02

(54) **METHOD AND DEVICE FOR ADJUSTING A SET POINT**
VERFAHREN UND VORRICHTUNG ZUM EINSTELLEN EINES SOLLWERTS
PROCÉDÉ ET DISPOSITIF POUR AJUSTER UN POINT DE CONSIGNE

(43) Date of publication of application: 03.08.2016
(73) Proprietor: Schneider Electric Buildings LLC, North Andover, MA 02845 (US)
(72) Inventor: LOFGREN, Fredrik, 211 50 Malmo (SE); BIRGER, Lars, 212 91 Malmo (SE)
(74) Representative: AWA Sweden AB
(86) International application number: PCT/US2013/061605
(87) International publication number: WO 2015/047242

(56) References cited:
- WO-A1-2012/017241
- WO-A1-2013/132244
- WO-A2-2012/092622
- US-A1- 2002 140 633
- US-A1- 2007 208 460
- US-A1- 2007 208 460
- US-A1- 2009 215 534
- US-A1- 2010 070 085
- US-A1- 2010 238 182
- US-A1- 2011 175 810
- US-A1- 2012 046 792
- US-A1- 2012 124 516

## Description

### Technical field

The present invention relates to a building control system, and more particular to a method and a device for set point adjustment in a building control system.

### Background art

Conventionally, when adjusting a set point in a building control system, for example the set point for temperature of an air condition system or the set point for the amount of indoor lighting, a user will interact physically with a set point adjusting device, for example by pushing buttons on the device. This can be a problem in environments where the hand of the user may be dirty, for example in a bakery or a factory, or in an environment where the risk of spreading diseases is big, for example at a hospital.

A solution on this problem may be to use a set point adjusting device equipped with a camera and software for recognizing gestures. In this case, the user does not need to touch the device for adjusting the set point.

WO12092622 (Matsuoka et al.) discloses a system where a sensing and controlling unit for controlling a heating, ventilation, and air conditioning (HVAC) system is provided with a camera and is programmed to recognize hand gestures from a user. For example, a clockwise hand rotation may turn up the temperature and a counterclockwise hand rotation may turn down the temperature.

A system using a camera and gesture recognition software may be expensive to manufacture and hard to develop.

### Summary of the invention

In view of the above, an objective of the invention is to solve or at least reduce one or several of the drawbacks discussed above. Generally, the above objective is achieved by the attached independent patent claims.

According to a first aspect, the present invention is realized by a method for set point adjustment in a building control system, comprising the steps of: sensing an object at a first distance from an active sensor, whereby the set point adjustment is initiated; sensing a movement of the object from the first distance to a second distance from the active sensor; and adjusting the set point from a first set point to a second set point in response to sensing the movement of the object, wherein the second set point depends on the first set point and an offset between the first distance and the second distance.

The present invention is based upon the realization that an active sensor configured to sense the distance to an object in combination with a method for adjusting a set point based on for example two distances between the object and the sensor, one initial distance (first distance) and one adjustment distance (second distance) may provide a simple and easy to grasp method for adjusting the set point. A device implementing the method can be cheap and easy to develop, since no expensive hardware is needed and the method may be easily implemented. Moreover, no physical contact is needed between a user and the device implementing the method, which may be advantageous for hygienic reasons. By initiating the set point adjustment by sensing the object at the first distance, two things may be achieved. Firstly, the initiation is simple, and after the initiation the user only needs to move the object, e.g. the hand of the user, a distance towards or away from the active sensor for changing the set point. Secondly, by only initiating the set point adjustment when the object is at a certain distance from the active sensor, the risk of accidental initiation may be reduced.

By the term "active sensor" should, in the context of present specification, be understood a sensor from which some kind of signals are transmitted which then is reflected, refracted of scattered and the measured when received by the sensor again. An active sensor is the opposite of a passive sensor which just receive signals, for example a camera.

By the term "set point" should, in the context of present specification, be understood a target value for an automatic controller, for example in an air condition system or any other type of HVAC systems.

According to an embodiment, in the step of adjusting the set point, the second set point further depends on the time the object is sensed at the second distance. This means that when the object is moved to the second distance, the set point will continue to change depending for how long the object is kept at the second distance. This may be advantageous since the necessary movement of the object for adjusting the set point is reduced, which may simplify the process of learning the set point adjustment method for the user. The present embodiment may also decrease the need for a sensitive active sensor. In its most simple embodiment, the active sensor only need to be configured to sense objects at three distances, one initial distance (first distance), one distance closer to the active sensor compared to the first distance, and one distance further away from the active sensor compared to the first distance.

According to an embodiment, the difference between the second set point and the first set point is proportional to the time the object is sensed at the second distance. This may make the adjustment of the set point easily controllable.

According to an embodiment, if the time the object is sensed at the second distance is less than a minimum set point adjustment time, the set point is not adjusted. This may be advantageous since the user may have time to abort the set point adjustment before the actual set point is starting to change. According to embodiments, the minimum set point adjustment time may be one second or more or less depending on the configuration of the device implementing the set point adjustment method. The less the time is configured to be, the faster the adjustment will start. The more the time is configured to be, the more time the user has to decide to abort the adjustment.

According to an embodiment, the time is measured in discrete steps. For example, the set point may be adjusted once every second. According to one embodiment, the time between each discrete step is equal to the minimum set point adjustment time. It may be advantageous to measure the time in discrete steps since this can have the effect that the set point is adjusted in suitable steps, for example a half of a degree each second in case the set point applies to temperature of a room. Since the user often may not sense any difference smaller than a certain change in temperature, for example half a degree, and it may not be possible for the air condition system to adjust the temperature in a room in smaller steps than a certain change in temperature, for example half a degree, this may both simplify the adjustment method for the user as well as decrease the complexity when implementing the method in a building control system.

According to an embodiment, the step of adjusting the set point comprises increasing or decreasing the set point depending on whether the offset is positive or negative. According to some embodiments, the set point is increased when the second distance is shorter compared to the first distance which in turn means that the set point is decreased when the second distance is longer compared to the first distance. According to other embodiments, the set point is decreased when the second distance shorter compared to the first distance which in turn means that the set point is increased when the second distance is longer compared to the first distance.

According to some embodiments, the difference between the second set point and the first set point is proportional to the offset. Generally, this means that the larger the offset is between the first and the second distance, the larger is the adjustment of the set point. The offset may be measured in discrete steps. For example, in the case of adjusting the set point in an air condition system, the set point may be adjusted with half a degree for every 5 centimeter the object is moved from the first distance.

According to an embodiment, the method of adjusting the set point further comprises the steps of: sensing a further movement of the object from the second distance to a third distance from the active sensor; and adjusting the set point from the second set point to a third set point in response to sensing the further movement of the object, wherein the difference between the third set point and the second set point is proportional to an offset between the second distance and the third distance. The set point adjustment is generally continued until it is aborted in some way. This means that the user may continue to move the object, for example the hand of the user, until he/she is satisfied with the adjusted set point. The further movement according to this embodiment may be in the same direction as the first movement, or the direction may have changed. This may be an intuitive way of adjusting a set point and the set point adjustment may be easily controllable since the user can move his/her hand in small steps back and forth relative to the active sensor for adjusting the set point towards the desired value.

According to an embodiment, the method of adjusting the set point further comprises the steps of sensing that the object is removed from a sensing area of the active sensor; and in response thereto, terminating the set point adjustment. This may be a simple to grasp and easy to implement way of terminating the set point adjustment. Moreover, if the set point adjustment is accidentally initiated, for example when a user is walking pass the active sensor at the initiation distance, the adjustment is quickly terminated when the user is no longer within the sensing area, i.e. when he/she has walked past the sensor.

According to an embodiment, the set point adjustment is further initiated by sensing a movement of the object from a start distance to the first distance. This may further decrease the risk of accidentally initiating the set point adjustment process since the object must be sensed at two different distances from the active sensor before the initiation is complete. A further advantage of the present embodiment may be that this extra initiating step does not put any extra requirements on the active sensor used compared to the above. To even further decrease the risk of accidentally initiating the set point adjustment, it may further be required that a speed of the movement of the object from the start distance to the first distance is within a certain range.

The device implementing the set point adjustment method may be configured to give user feedback while performing the set point adjustment. According to some embodiment, the device is configured to generate a feedback indicative of that the set point adjustment is initiated. According to some embodiments, the device is configured to generate a feedback indicative of the adjusted set point. The feedback may be any suitable feedback, for example audio and/or visual feedback.

According to a second aspect, the present invention is realized by a device for set point adjustment in a building control system, comprising: an active sensor configured to: sense an object at a first distance from the active sensor, whereby the set point adjustment is initiated; sense a movement of the object from the first distance to a second distance from the active sensor; and a processing unit connected to the active sensor and configured to: adjust the set point from a first set point to a second set point in response to the active sensor sensing a movement of the object, wherein the second set point depends on the first set point and an offset between the first distance and the second distance.

The active sensor may be one of an IR-sensor, an ultra sound sensor and a laser sensor.

The second aspect may generally have the same features and advantages as the first aspect.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of the element, device, component, means, step, etc., unless explicitly stated otherwise. The steps of any method disclosed herein do not have to be performed in the exact order disclosed, unless explicitly stated.

### Brief description of drawings

Embodiments of the present invention will now be described in more detail, reference is being made to the enclosed drawings, in which:
figure 1 is a flow chart of a method according to embodiments,
figure 2 is a block diagram of a set point adjusting device according to embodiments,
figures 3a-d shows a method for adjusting a set point according to embodiments,
figures 4a-d shows another method for adjusting a set point according to embodiments,
figure 5 show a method for initializing a set point adjustment according to embodiments,
figure 6 show a flow chart of a set point adjustment method according to embodiments.

### Detailed description of the invention

Embodiments of the present invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Furthermore, like numbers refer to like elements throughout.

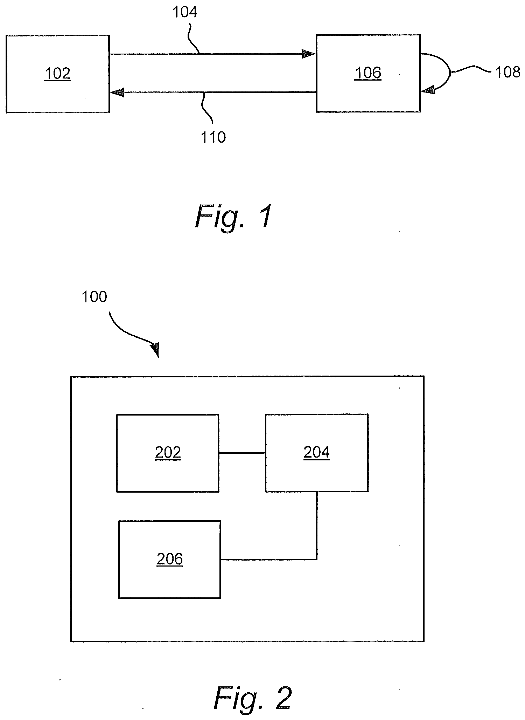

Figure 2 shows by way of example a block diagram of a device 100 for set point adjustment in a building control system. The device 100 comprises an active sensor 202. The active sensor 202 may be configured for sensing objects at a certain range in front of the active sensor 202, for example at a first distance from the active sensor whereby the set point adjustment may be initiated. The certain range is in this specification referred to as the sensing area of the active sensor 202 or the device 100 comprising the active sensor 202. The active sensor 202 may further be configured for sensing movements of the object within the certain range of the active sensor 202, for example from the first distance to a second distance from the active sensor 202. The active sensor 202 may further be configured for sensing when the object is no longer within the certain range of the active sensor 202.

The device 100 may further comprise a processing unit 204, connected to the active sensor. The processing unit 204 may be configured to adjust the set point in response to the active sensor 202 sensing an object, sensing movements of the object, sensing that the object is no longer in front of the active sensor 202 or any other similar or equivalent actions from the active sensor 202. The processing unit 204 may for example be configured to adjust the set point from a first set point to a second set point in response to the active sensor 202 sensing a movement of the object. The second set point may depend on the first set point and an offset between the first distance and the second distance. The processing unit 204 may be configured to measure the time the active sensor 202 is sensing the object at a certain distance and use this measurement for adjusting the set point. The processing unit 204 may further be configured to calculate the velocity of the movement of an object, by calculating the time and the offset between two sensed distances.

The device 100 may further comprise a feedback unit 206 connected to the processing unit 204. The feedback unit may comprise a number of light emitting devices, for example light-emitting diodes (LED), a graphical display, a speaker or any of the above in combination. The feedback unit 206 may be configured to generate a feedback indicative of that the set point adjustment is initiated. This feedback may comprise playing a sound on the speaker of the feedback unit 206, flash the light emitting device or the graphical display, show an icon or text on the graphical display or any other similar feedback. The feedback unit 206 may further be configured to generate a feedback indicative of the adjusted set point. This feedback may for example comprise playing a sound with higher frequency if the set point is increased or playing a sound with a lower frequency if the set point is decreased or vice versa. Other examples of such a feedback may be showing the adjusted set point in numbers on the graphical display or changing the colour of the light emitted by the light emitting devices. The feedback unit 206 may further be configured to generate a feedback indicative of terminating the set point adjustment. In the case the set point adjustment can be cancelled or reset, the feedback unit 206 may further be configured to generate a feedback indicative of those events.

Figure 1 show by way of example a flow chart of different possible states and transitions between those states in the device 100 described in figure 2 for adjusting a set point in a building control system. The device 100 can be in two main states, an inactive state 102 and an active state 106. In the inactive state 102, the set point cannot be adjusted. The only thing that may be done in the inactive state 102 is activation 104. By activating 104 the device 100, the device passes from the inactive state 102 to the active state 106. This transition 104 between the inactive state 102 and the active state 106 will be further elaborated below. When the device 100 is in the active state 106, set point adjustment 108 is possible. The set point adjustment 108 may mean both increasing and decreasing the set point. While adjusting 108 the set point, the device 100 will remain in the active state 106. When the set point adjustment 108 is considered to finished, the set point adjustment is terminated 110 and the device thus passes from the active state 106 to the inactive state 102.

It may be noted that more states and transitions may be added to the device 100 in further embodiment. There may for example be a reset state connected to the active state 106, wherein the set point is reset to the value it had before the device entered the active state 106. In this case, the device 100 may still be in the active state 106 after the reset. In further embodiments there may also exist a cancel state connected to the active state 106 which means that the set point is reset to the value it had before the device entered the active state 106 and the device is put in the inactive state 102.

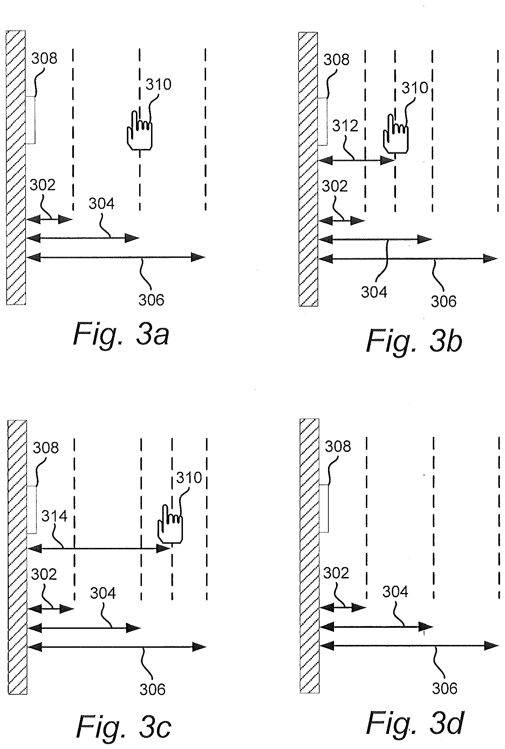

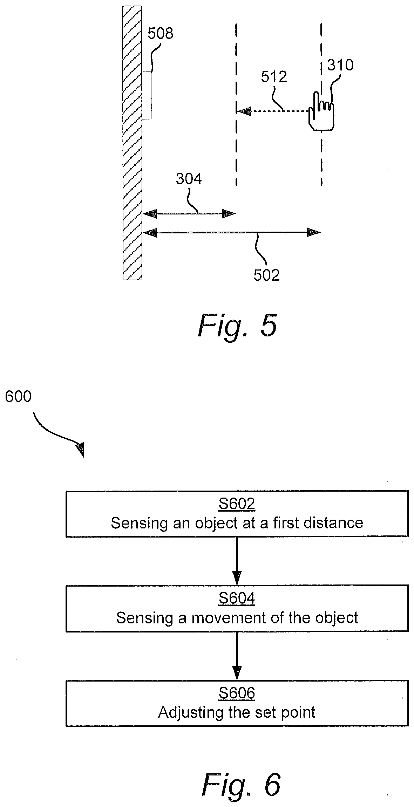

Figures 3a-d describes by way of example a method, partly described in figure 6, and apparatus for adjusting a set point in a building control system. A device 308 for set point adjustment is positioned in a space, for example on a wall. The device 308 is configured to sense S602 an object within a certain range, or sensing area, of an active sensor in the device 308, for example from a minimum distance 302 from the device 308 to a maximum distance 306 from the device 308. In this example, the device 308 senses S602 an object 310 at an initiation distance, or a first distance, 310 from the device 308 whereby the set point adjustment is initiated. It may be noted that the device 308 may be configured to initiate the set point adjustment when sensing the object 310 within a certain range of the initiation distance, or first distance, 310. In this example, the sensed object 310 is depicted by a hand. In further examples, the sensed object may be something else, for example an object configured to be recognized as a set point adjustment object by the active sensor. An example of such an object may be a metal object. In the case the active sensor is an IR-sensor, the active sensor may be configured such that only a part of a human, or something else emitting heat with a certain temperature, may be used for adjusting the set point. In figure 3b, the hand 310 is moved from the first distance from the device 308 to a second distance 312 from the device 308. In other words, the active sensor in the device 308 senses S604 a movement of the object 310 from the first distance 304 to the second distance 312. It may be noted that the object is still within the certain range, or sensing area, of the device 308, depicted by the arrows 302 and 306. As described above, the device 308 may, in response to sensing the movement of the object 310, adjust S606 the set point from a first set point to a second set point. The second set point may depend on the first set point and an offset between the first distance 304, i.e. the distance 304 from the object 310 to the device 308 shown in figure 3a, and the second distance 312, i.e. the distance 312 from the object 310 to the device 308 shown in figure 3b.

According to some embodiments, the set point adjustment depends on the time the object 310 is sensed at the second distance 312, for example the distance 312 from the object 310 to the device 308 shown in figure 3b. The difference between the second set point and the first set point may be proportional to the time the object 310 is sensed by the active sensor in the device 308 at the second distance 312. It may be noted that according to some embodiments, the object 310 is considered to be at the second distance as long as the object 310 is not moved more than a certain distance. For example, the object may be moved a closer to and/or further from the device 308 and still be considered as being at the second distance. According to some embodiments, the object 310 in figure 3b may be considered to be at the second distance as long as it is not moved pass the dashed line at the distance from the sensor depicted by the arrow 302 or dashed line at the distance from the sensor depicted by the arrow 304. This may be advantageous since the object 310 does not have to be held still at the second distance for controlled adjustment of the set point. According to some embodiment, if the time the object 310 is sensed at the second distance 312 is less than a minimum set point adjustment time, the set point is not adjusted. According to some embodiment, the time is measured in discrete steps.

The method for adjusting a set point in a building control system shown in figures 3a-d will now be exemplified.

The device 308 is configured for adjusting the temperature in a room. The current temperature setting is 21 degrees. In figure 3a, the user put his/her hand 310 at the initialisation distance 304 from device 308, whereby the set point adjustment is initiated. As described above, the device 308 may be configured to give feedback indicative of that the set point adjustment is initiated. In figure 3b, the user moves his/her hand 310 closer to the device 308 and holds it there. After the minimum set point adjustment time, for example one second, the set point starts to increase in discrete steps, for example by one degree each second. As described above, the device 308 may be configured to give feedback indicative of the adjusted set point. Now the set point is at 25 degrees. In figure 3c, the user decides that this is to hot and move the hand 310 further away 314 from the device 310 and holds it there. The set point starts to decrease in discrete steps, one degree each second. After 2 seconds, the set point is at 23 degrees and the user decides that this is a good temperature. In figure 3d, the user has removed his/her hand from a sensing area of the device 308, and in response thereto, the device 308 terminates the set point adjustment.

It may be noted that according to other embodiments, the set point is decreased when the object 310 is moved closer to the device 308, i.e. as depicted in figure 3b, and increased when the object 310 is moved further from the device 308, i.e. as depicted in figure 3c. It may also be noted that the device 308, for example the processor in the device, may be configured to not apply the adjusted set point directly in the building control system. Further implementation limitations may exist. For example, the adjustment of indoor lightning, or the dimming of light sources, may advantageously not be changed too quickly, since the user can perceive this as disturbing. In this case, the processor in the device 308 may be configure to add a delay to the adjustment, or maybe skip some of the adjusted set points or add further adjusted set points, to make the adjustment more restful for the user. Moreover, it may be noted that the device may be implemented to adjust the set point directly, i.e. while the user is adjusting it, or change the set point when the set point adjustment is terminated. In the case when the adjustment applies to indoor lighting or the control a window blinds, it may be advantageous if the set point is adjusted while the user is adjusting it, such that the user get immediate feedback while adjusting the set point. In the case when the adjustment applies to indoor temperature, the system changing the temperature is slow in nature and no immediate feedback may be possible. In this case, the set point may be adjusted when the set point adjustment is terminated.

The above described method depicted in figure 3a-d may be a simple and easily understandable way of changing a set point. By letting the adjusted set point depend on the time the object 310 is sensed at for example the second distance 312, less movement of the object 310 may be required for controlled adjustment of the set point. The active sensor in the device 308 may only have to be configured for sensing a distance to an object within its sensing area, thus a simple and cheap sensor may be used.

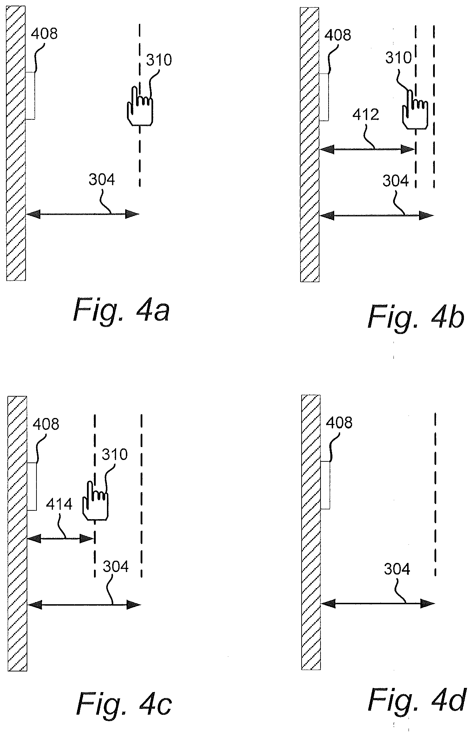

Figures 4a-d describes by way of example another method, partly described in figure 6, and apparatus for adjusting a set point in a building control system.

It may be noted that features, advantages and variations described in conjunction with figure 3a-d may generally be applied to applicable parts of the method and apparatus described in conjunction with figure 4a-d below.

A device 408 for set point adjustment is positioned in a space, for example on a wall. In this example, the device 408 senses S602 an object 310 at initiation distance, or a first distance, 304 from the device 408 whereby the set point adjustment is initiated. In figure 4b, the device senses S604 a movement of the object 310 from the first distance 304 to a second distance 412 from the active sensor 202. As described above, the device 408 may, in response to sensing the movement of the object 310, adjust S606 the set point from a first set point to a second set point. The second set point may depend on the first set point and an offset between the first distance 304, i.e. the distance 304 from the object 310 to the device 408 shown in figure 4a, and the second distance 412, i.e. the distance 412 from the object 310 to the device 408 shown in figure 4b. According to some embodiments, the difference between the second set point and the first set point is proportional to the offset. Accordingly, the closer the object 310 is brought to the device 408, the more difference there is between the initial set point, e.g. the first set point, and the adjusted set point, e.g. the second set point. According to some embodiments, the device 408 may, in response to sensing a further movement of the object 310 from the second distance 412, as depicted in figure 4b, to a third distance 414, as depicted in figure 4c, adjust the set point from the second set point to a third set point. The difference between the third set point and the second set point may be proportional to an offset between the second distance 412 and the third distance 414.

According to some embodiments, the above mentioned offset is measured in discrete steps. For example, the adjusted set point is increased one degree for every 5 centimetre closer a user brings his/her hand 310 to the device 408. This may be advantageous since the object 310, for example the uses hand, does not have to be held perfectly still at a distance for controlled adjustment of the set point. The above is of course applicable to the case where the object 310 is brought further away from the device 408. It may be noted that according to other embodiments, the set point is decreased when the object 310 is moved closer to the device 408 and increased when the object 310 is moved further from the device 408. In figure 4d, the object 310 is removed from a sensing area of the device 408, i.e. from a sensing area of an active sensor in the device 408, and in response thereto, the device is terminating the set point adjustment.

The above described method depicted in figure 4a-d may be a simple and easily understandable way of changing a set point. By letting the adjustment of the set point be proportional to the movement of the object 310, an intuitive way of changing the set point may be achieved. The active sensor in the device 408 may only have to be configured for sensing a distance to an object within its sensing area, thus a simple and cheap sensor may be used.

The initiation of the set point adjustment methods described in figures 3a-d and 4a-d may comprise only sensing the object 310 at a certain distance from the device 308, 408. According to further embodiments, the set point adjustment is further initiated by sensing the object 310 at the first distance 304 for a certain period of time, for example 1 or 5 seconds. The longer the certain period of time is configured to be, the less is the risk of initiating the set point adjustment by mistake.

Figure 5 illustrates by way of example further possible steps for initiating a set point adjustment. According to one embodiment, the set point adjustment is further initiated by a device 508 sensing a movement of the object 310 from a start distance 502 to the first distance 304. It may be noted that the device 508 may be configured to initiate the set point adjustment when sensing a movement of the object 310 from within a certain range of the start distance 502 to within a certain range of the first distance 304.

According to further embodiments, the set point adjustment is further initiated by the device 508 sensing that a speed of the movement 512 of the object 310 from the start distance 502 to the first distance 304 is within a certain range, for example between a half and one meter per second or any other suitable range.

The person skilled in the art realizes that the present invention by no means is limited to the embodiments described above. On the contrary, many modifications and variations are possible within the scope of the appended claims. For example, the feedback unit of the device 308, 408, 508 may be configured for giving different feedback when the object 310 is first sensed at the first distance 304 and when the object 310 is held at the first distance 304 long enough such that the set point adjustment is initiated.

## Claims

1. A method for set point adjustment in a building control system, comprising the steps of:
sensing (S602) an object (310) at a first distance (304) from an active sensor (202), whereby the set point adjustment is initiated;
sensing (S604) a movement of the object (310) from the first distance (304) to a second distance (312, 412) from the active sensor (202); and
adjusting (S606) the set point from a first set point to a second set point in response to sensing the movement of the object (310), wherein the second set point depends on the first set point and an offset between the first distance (304) and the second distance (312, 412).

2. The method of claim 1, wherein in the step of adjusting the set point, the second set point further depends on the time the object (310) is sensed at the second distance (312).

3. The method of claim 2, wherein the difference between the second set point and the first set point is proportional to the time the object (310) is sensed at the second distance (312).

4. The method of any one of claims 2-3, wherein if the time the object (310) is sensed at the second distance (312) is less than a minimum set point adjustment time, the set point is not adjusted.

5. The method of claim 3, wherein the time is measured in discrete steps.

6. The method of any one of claims 2-5, wherein the step of adjusting the set point comprises increasing or decreasing the set point depending on whether the offset is positive or negative.

7. The method of claim 1, wherein the difference between the second set point and the first set point is proportional to the offset.

8. The method of claim 7, wherein the offset is measured in discrete steps.

9. The method of any one of claims 7-8, further comprising the steps of:
sensing a further movement of the object (310) from the second distance (412) to a third distance (414) from the active sensor (202); and
adjusting the set point from the second set point to a third set point in response to sensing the further movement of the object (310), wherein the difference between the third set point and the second set point is proportional to an offset between the second distance (412) and the third distance (414).

10. The method of any one of claims 1-9, further comprising the steps of:
sensing that the object (310) is removed from a sensing area of the active sensor (202); and
in response thereto, terminating the set point adjustment.

11. The method of any one of claims 1-10, wherein the set point adjustment is further initiated by:
sensing the object (310) at the first distance (304) for a certain period of time and/or sensing a movement of the object (310) from a start distance (502) to the first distance (304).

12. The method of claim 11, wherein the set point adjustment is further initiated by:
sensing that a speed of the movement (512) of the object (310) from the start distance (502) to the first distance (304) is within a certain range.

13. The method of any one of claims 1-12, comprising the step of:
generating a feedback indicative of that the set point adjustment is initiated and/or indicative of the adjusted set point.

14. A device (100, 308, 408, 508) for set point adjustment for a building control system, comprising:
an active sensor (202) configured to:
sense an object at a first distance from the active sensor, whereby the set point adjustment is initiated;
sense a movement of the object from the first distance to a second distance from the active sensor; and
a processing unit (204) connected to the active sensor (202) and configured to:
adjust the set point from a first set point to a second set point in response to the active sensor (202) sensing a movement of the object, wherein the second set point depends on the first set point and an offset between the first distance and the second distance.

15. The device of claim 14, wherein the active sensor (202) is one of an IR-sensor, an ultra sound sensor and a laser sensor.

## Patentansprüche

1. Verfahren zur Sollwerteinstellung in einem Gebäudesteuerungssystem, umfassend die Schritte:
Erfassen (S602) eines Objekts (310) in einem ersten Abstand (304) von einem aktiven Sensor (202), wodurch die Sollwerteinstellung eingeleitet wird;
Erfassen (S604) einer Bewegung des Objekts (310) von dem ersten Abstand (304) zu einem zweiten Abstand (312, 412) von dem aktiven Sensor (202); und
Einstellen (S606) des Sollwerts von einem ersten Sollwert auf einen zweiten Sollwert als Reaktion auf das Erfassen der Bewegung des Objekts (310), wobei der zweite Sollwert von dem ersten Sollwert und einem Versatz zwischen dem ersten Abstand (304) und dem zweiten Abstand (312, 412) abhängt.

2. Verfahren nach Anspruch 1, wobei in dem Schritt des Einstellens des Sollwerts der zweite Sollwert ferner von der Zeit abhängt, zu der das Objekt (310) in dem zweiten Abstand (312) erfasst wird.

3. Verfahren nach Anspruch 2, wobei die Differenz zwischen dem zweiten Sollwert und dem ersten Sollwert proportional zu der Zeit ist, in der das Objekt (310) in dem zweiten Abstand (312) erfasst wird.

4. Verfahren nach einem der Ansprüche 2 bis 3, wobei, wenn die Zeit, zu der das Objekt (310) in dem zweiten Abstand (312) erfasst wird, kleiner als eine minimale Sollwerteinstellungszeit ist, der Sollwert nicht eingestellt wird.

5. Verfahren nach Anspruch 3, wobei die Zeit in diskreten Schritten gemessen wird.

6. Verfahren nach einem der Ansprüche 2 bis 5, wobei der Schritt des Einstellens des Sollwerts Erhöhen oder Verringern des Sollwerts in Abhängigkeit davon, ob der Versatz positiv oder negativ ist, umfasst.

7. Verfahren nach Anspruch 1, wobei die Differenz zwischen dem zweiten Sollwert und dem ersten Sollwert proportional zu dem Versatz ist.

8. Verfahren nach Anspruch 7, wobei der Versatz in diskreten Schritten gemessen wird.

9. Verfahren nach einem der Ansprüche 7 bis 8, ferner umfassend die Schritte:
Erfassen einer weiteren Bewegung des Objekts (310) von dem zweiten Abstand (412) zu einem dritten Abstand (414) von dem aktiven Sensor (202); und
Einstellen des Sollwerts von dem zweiten Sollwert auf einen dritten Sollwert als Reaktion auf das Erfassen der weiteren Bewegung des Objekts (310), wobei die Differenz zwischen dem dritten Sollwert und dem zweiten Sollwert proportional zu einem Versatz zwischen dem zweiten Abstand (412) und dem dritten Abstand (414) ist.

10. Verfahren nach einem der Ansprüche 1 bis 9, ferner umfassend die Schritte:
Erfassen, dass das Objekt (310) aus einem Erfassungsbereich des aktiven Sensors (202) entfernt ist; und
als Reaktion darauf, Beenden der Sollwerteinstellung.

11. Verfahren nach einem der Ansprüche 1 bis 10, wobei die Einstellung des Sollwerts ferner eingeleitet wird durch:
Erfassen des Objekts (310) in dem ersten Abstand (304) für eine bestimmte Zeitperiode und/oder Erfassen einer Bewegung des Objekts (310) von einem Startabstand (502) zu dem ersten Abstand (304) .

12. Verfahren nach Anspruch 11, wobei die Sollwerteinstellung ferner eingeleitet wird durch: Erfassen, dass eine Geschwindigkeit der Bewegung (512) des Objekts (310) von dem Startabstand (502) zu dem ersten Abstand (304) innerhalb eines bestimmten Bereichs liegt.

13. Verfahren nach einem der Ansprüche 1 bis 12, umfassend den Schritt:
Erzeugen einer Rückmeldung, die anzeigt, dass die Sollwerteinstellung eingeleitet ist, und/oder die den eingestellten Sollwert anzeigt.

14. Vorrichtung (100, 308, 408, 508) zur Sollwerteinstellung für ein Gebäudesteuerungssystem, umfassend:
einen aktiven Sensor (202), der konfiguriert ist zum:
Erfassen eines Objekts in einem ersten Abstand von dem aktiven Sensor, wodurch die Sollwerteinstellung eingeleitet wird;
Erfassen einer Bewegung des Objekts von dem ersten Abstand zu einem zweiten Abstand von dem aktiven Sensor; und
eine Verarbeitungseinheit (204), die mit dem aktiven Sensor (202) verbunden ist und
konfiguriert ist zum:
Einstellen des Sollwerts von einem ersten Sollwert zu einem zweiten Sollwert in Reaktion darauf, dass der aktive Sensor (202) eine Bewegung des Objekts erfasst, wobei der zweite Sollwert von dem ersten Sollwert und einem Versatz zwischen der ersten Abstand und dem zweiten Abstand abhängt.

15. Vorrichtung nach Anspruch 14, wobei der aktive Sensor (202) ein IR-Sensor, ein Ultraschallsensor oder ein Lasersensor ist.

## Revendications

1. Procédé d'ajustement de point de consigne dans un système de commande de bâtiment, comprenant les étapes consistant :
à détecter (S602) un objet (310) à une première distance (304) d'un capteur actif (202), grâce à quoi le point de consigne est initié ;
à détecter (S604) un mouvement de l'objet (310) de la première distance (304) à la deuxième distance (312, 412) du capteur actif (202) ; et
à ajuster (S606) le point de consigne, d'un premier point de consigne à un deuxième point de consigne, à la suite de la détection du mouvement de l'objet (310), dans lequel le deuxième point de consigne dépend du premier point de consigne et d'un décalage entre la première distance (304) et la deuxième distance (312, 412).

2. Procédé selon la revendication 1, dans lequel à l'étape d'ajustement du point de consigne, le deuxième point de consigne dépend en outre du moment où l'objet (310) est détecté à la deuxième distance (312).

3. Procédé selon la revendication 2, dans lequel la différence entre le deuxième point de consigne et le premier point de consigne est proportionnelle au moment où l'objet (310) est détecté à la deuxième distance (312) .

4. Procédé selon l'une quelconque des revendications 2 à 3, dans lequel, si le moment où l'objet (310) est détecté à la deuxième distance (312), est inférieur à un temps d'ajustement de point de consigne minimal, le point de consigne n'est pas ajusté.

5. Procédé selon la revendication 3, dans lequel le temps est mesuré dans des étapes discrètes.

6. Procédé selon l'une quelconque des revendications 2 à 5, dans lequel l'étape d'ajustement du point de consigne consiste à augmenter ou à réduire le point de consigne selon que le décalage est positif ou négatif.

7. Procédé selon la revendication 1, dans lequel la différence entre le deuxième point de consigne et le premier point de consigne est proportionnelle au décalage.

8. Procédé selon la revendication 7, dans lequel le décalage est mesuré dans des étapes discrètes.

9. Procédé selon l'une quelconque des revendications 7 à 8, comprenant en outre les étapes consistant :
à détecter un autre mouvement de l'objet (310) de la deuxième distance (412) à une troisième distance (414) à partir du capteur actif (202) ; et
à ajuster le point de consigne du deuxième point de consigne à un troisième point de consigne à la suite de la détection de l'autre mouvement de l'objet (310), dans lequel la différence entre le troisième point de consigne et le deuxième point de consigne est proportionnelle à un décalage entre la deuxième distance (412) et la troisième distance (414).

10. Procédé selon l'une quelconque des revendications 1 à 9, comprenant en outre les étapes consistant :
à détecter que l'objet (310) est retiré d'une zone de détection du capteur actif (202) ; et
à la suite de ceci, à terminer l'ajustement de point de consigne.

11. Procédé selon l'une quelconque des revendications 1 à 10, dans lequel l'ajustement de point de consigne est en outre initié :
en détectant l'objet (310) à la première distance (304) pendant une certaine période de temps et/ou en détectant un mouvement de l'objet (310) d'une distance de départ (502) à la première distance (304).

12. Procédé selon la revendication 11, dans lequel l'ajustement de point de consigne est en outre initié :
en détectant qu'une vitesse de déplacement (512) de l'objet (310) de la distance de départ (502) à la première distance (304) se trouve dans une certaine plage.

13. Procédé selon l'une quelconque des revendications 1 à 12, comprenant l'étape consistant :
à générer une rétroaction indiquant que l'ajustement de point de consigne est initié et/ou indiquant le point de consigne ajusté.

14. Dispositif (100, 308, 408, 508) pour un ajustement de point de consigne pour un système de commande de bâtiment, comprenant :
un capteur actif (202) configuré :
pour détecter un objet à une première distance du capteur actif, grâce à quoi le point de consigne est initié ;
pour détecter un mouvement de l'objet de la première distance à la deuxième distance du capteur actif ; et
une unité de traitement (204) raccordée au capteur actif (202) et configurée :
pour ajuster le point de consigne, d'un premier point de consigne à un deuxième point de consigne, à la suite du fait que le capteur actif (202) détecte un mouvement de l'objet, dans lequel le deuxième point de consigne dépend du premier point de consigne et d'un décalage entre la première distance et la deuxième distance.

15. Dispositif selon la revendication 14, dans lequel le capteur actif (202) est un capteur IR et/ou un capteur ultrasons et/ou un capteur laser.
